# EUROPÄISCHE PATENTSCHRIFT

(11) **EP 1 000 909 B1**
(45) Veröffentlichungstag und Bekanntmachung des Hinweises auf die Patenterteilung: **02.07.2003**
(21) Anmeldenummer: 99122598.8
(22) Anmeldetag: 12.11.1999
(51) Int. Cl.: C03B 37/012, C03B 37/018, C03B 19/14

(54) **Verfahren zur Herstellung einer Vorform für eine optische Faser und für die Durchführung des Verfahrens geeignetes Substratrohr**
Process for producing a preform for an optical fibre and a substrate tube suitable for use in the process
Procédé de fabrication d'une préforme pour une fibre optique et un tube de substrat adapté pour l'utilisation dans le procédé

(30) Priorität: 16.11.1998 DE 19852704
(43) Veröffentlichungstag der Anmeldung: 17.05.2000
(73) Patentinhaber: Heraeus Tenevo AG, 63450 Hanau (DE)
(72) Erfinder: Schaper, Hartwig, 63741 Aschaffenburg (DE); Treber, Norbert, 63457 Hanau (DE); Humbach, Oliver, 63500 Seligenstadt (DE); Haken, Uwe, 63776 Mömbris (DE); Jablonowski, Donald Paul, Dunwoody, GA 30338 (US)
(74) Vertreter: Staudt, Armin, Dipl.-Ing.

(56) Entgegenhaltungen:
- EP-A- 0 249 230
- EP-A- 0 434 237
- EP-A- 0 762 159
- EP-A- 0 785 448
- PATENT ABSTRACTS OF JAPAN vol. 13, no. 423, 20. September 1989 (1989-09-20) & JP 01 160840 A (SUMITOMO ELECTRIC IND. LTD.), 23. Juni 1989 (1989-06-23)
- PATENT ABSTRACTS OF JAPAN vol. 13, no. 15, 13. Januar 1989 (1989-01-13) & JP 63 222031 A (SUMITOMO ELECTRIC IND. LTD.), 14. September 1988 (1988-09-14)

## Beschreibung

Die Erfindung betrifft ein Verfahren zur Herstellung einer Vorform für eine optische Faser für die optische Nachrichtentechnik, durch Bereitstellen eines Quarzglas-Substratrohres, das in radialer Richtung Bereiche unterschiedlicher Dotierung aufweist, Einbringen eines Kernglases aus synthetischem Quarzglas in das Substratrohr, und Überfangen des Substratrohres mit einem Mantelglas-Rohr.

Weiterhin betrifft die Erfindung ein Substratrohr aus Quarzglas für die Herstellung einer Vorform für eine optische Faser für die optische Nachrichtentechnik, wobei die Vorform ein Kernglas umfaßt, das von einem Mantelbereich umgeben ist, von dem mindestens ein Teil in Form des Substratrohres, das in radialer Richtung Bereiche unterschiedlicher Dotierung aufweist, bereitgestellt wird.

Vorformen für optische Fasern weisen im allgemeinen einen Kern auf, der von einem Mantel aus einem Material mit kleinerer Brechzahl umhüllt ist. Für die Herstellung des Kerns von Vorformen aus synthetischem Quarzglas haben sich Verfahrensweisen durchgesetzt, die als VAD-Verfahren (vapor-phase axial deposition; axiale Abscheidung aus der Dampfphase), OVD-Verfahren (outside vapor-phase deposition; Außenabscheidung aus der Dampfphase), MCVD-Verfahren (modified chemical vapor-phase deposition; Innenabscheidung aus der Dampfphase) und PCVD-Verfahren (plasma chemical vapor-phase deposition; Plasma-unterstützte Abscheidung aus der Dampfphase) bezeichnet werden. Bei allen diesen Verfahrensweisen wird das Kernglas dadurch erzeugt, daß SiO₂-Partikel auf einem Substrat abgeschieden und verglast werden. Die Abscheidung des Kernglases erfolgt bei VAD- und OVD-Verfahren von außen auf einem Substrat; bei MCVD- und PCVD-Verfahren auf der Innenwandung eines sogenannten Substratrohres. Das Substratrohr kann den optisch aktiven Mantel oder einen Teil davon bilden. In Abhängigkeit vom Faserdesign besteht das Substratrohr aus dotiertem oder undotiertem Quarzglas. Darüberhinaus ist die Herstellung von Vorformen nach der sogenannten Stab-in-Rohr-Technik bekannt, bei der ein Stab aus einem Kernglas in ein relativ dickwandiges Rohr aus Mantelglas eingeführt und mit diesem verschmolzen wird. Durch Elongieren der Vorform werden daraus optische Fasern erhalten.

Je nach Verfahrensweise wird das Mantelglas in einem separaten Verfahren hergestellt (OVD, MCVD, Plasmaverfahren, Stab-in-Rohr-Technik), oder das Mantelglas und das Kernglas werden gleichzeitig erzeugt, wie dies beim sogenannten VAD-Verfahren üblich ist. Der Brechzahlunterschied zwischen Kemglas und Mantelglas wird durch Beimengung geeigneter Dotierstoffe eingestellt. Es ist bekannt, daß Fluor und Bor die Brechzahl von Quarzglas senken, während zur Brechzahlerhöhung von Quarzglas eine Vielzahl von Dotierstoffen geeignet sind, insbesondere Germanium, Phosphor oder Titan.

Bei einem einfachen Faserdesign für eine optische Faser ist der Kern aus Quarzglas mit einem ersten Brechungsindex von einem Mantel aus Quarzglas mit einem zweiten, niedrigeren Brechungsindex umhüllt. Im Zuge der Optimierung optischer Fasern, insbesondere für die gleichzeitige Übertragung mehrerer Wellenlängen mit hohen Übertragungsraten werden jedoch Faserdesigns mit wesentlich komplexeren Brechzahlprofilen entwickelt. So ist beispielsweise in der EP-A1 785 448 eine optische Faser aus Quarzglas mit einem Faserdesign beschrieben, das als "double-core + double-cladding" (doppelter Kern + doppelter Mantel) bezeichnet wird, und das zur Verminderung der sogenannten Polarisationsmoden-Dispersion beitragen soll.

Ein Verfahren für die Herstellung einer Vorform und ein dafür geeignetes Substratrohr gemäß der eingangs genannten Gattung sind aus der EP-A2 434 237 bekannt. Darin wird die Herstellung einer optischen Einmodenfaser, die als "depressed-clad-type" bezeichnet wird, beschrieben. Die Vorform für diese Faser wird durch Innenabscheidung (MCVD-Verfahren) hergestellt. Hierzu wird auf der Innenwandung eines Substratrohres zunächst eine innere Mantelglasschicht aus fluordotiertem Quarzglas und dann eine Kemglasschicht aus Ge-dotiertem Quarzglas abgeschieden. Das dabei eingesetzte Substratrohr aus Quarzglas kann über seine Wandstärke Bereiche unterschiedlicher Fluor-Dotierung aufweisen. Das so innenbeschichtete Rohr wird zu einem Stab kollabiert und anschließend noch mit einem sogenannten "Jacketrohr" aus Mantelglas überfangen.

Mittels des bekannten Verfahrens ist die Herstellung dispersionsveschobener oder sogenannter dispersionskompensierender optischer Fasern zwar möglich. Jedoch müßten hierzu eine Vielzahl von Innenschichten in dem bekannten Substratrohr aufgebaut werden.

Mit der im Verlaufe der MCVD-Innenabscheidung zunehmenden Anzahl und Dicke der Innenschichten geht eine entsprechende Verengung der Innenbohrung des Substratrohres, und damit eine Verkleinerung der inneren Oberfläche einher. Dadurch nimmt die Effektivität der Abscheidung im Verlaufe des Prozesses ab. Dem kann durch Vergrößern von Innendurchmesser und Wandstärke des Substratrohres nur begrenzt entgegengewirkt werden, denn die für die Abscheidung erforderliche Temperatur innerhalb des Substratrohres wird üblicherweise durch Beheizung von außen erzeugt. Eine Vergrößerung von Innendurchmesser oder Wandstärke des Substratrohres erfordert jedoch eine Erhöhung der Außentemperatur, um die Abscheidebedingungen im Rohrinnem aufrechtzuerhalten. Diese wird aber durch Erweichung und plastische Verformung des Substratrohres limitiert. Darüberhinaus wird das Kollabieren bei dickwandigen oder großen Substratrohren und bei dicken Innenschichten zunehmend schwieriger.

Daher liegt der Erfindung die Aufgabe zugrunde, ein effektives und kostengünstiges Verfahren zur Herstellung einer Vorfom anzugeben, mit dem auch komplexe Brechzahlprofile mit hoher Produktivität erzeugt werden können, und ein dafür geeignetes Substratrohr zur Verfügung zu stellen, bei dem weniger Kemglasmaterial, sei es bei einer Innenabscheidung oder bei einem Kernglasstab für die Stab-in-Rohr-Technik, benötigt wird.

Hinsichtlich des Verfahrens wird diese Aufgabe ausgehend von dem eingangs beschriebenen Verfahren erfindungsgemäß dadurch gelöst, daß ein durch Verglasen eines rohrförmigen, porösen SiO₂-Rohlings erhaltenes Substratrohr eingesetzt wird, das mit einer Kernglasschicht versehen ist, die erzeugt wird, indem einem ersten radialen Teilbereich des SiO₂-Rohlings vor dem Verglasen ein die Brechzahl von Quarzglas erhöhender erster Dotierstoff hinzugefügt wird.

Das für das Verfahren eingesetzte Substratrohr umfaßt eine Kernglasschicht. Darunter wird ein radialer Teil der Gesamtwandstärke des Substratrohres verstanden, der einen Dotierstoff enthält, der die Brechzahl von Quarzglas erhöht. Derartige Dotierstoffe enthalten beispielsweise Germanium, Phosphor, Chlor, Erbium oder Titan. Üblicherweise ist die Brechzahl der Kernglasschicht somit höher als die von undotiertem Quarzglas. Für die Brechzahl von undotiertem Quarzglas werden in der Literatur für eine Meßwellenlänge von 589,3 nm (D-Linie der Natriumdampflampe) Werte zwischen n_{D} = 1,4585 und 1,4589 angegeben. Das Substratrohr kann eine oder mehrere Kernglasschichten aufweisen. Außer der Kernglasschicht ist noch mindestens eine weitere Schicht vorgesehen, die sich in ihrer Dotierung von derjenigen der Kernglasschicht unterscheidet. Über seine Wandstärke gesehen, weist das Substratrohr somit mehrere Schichten unterschiedlicher Dotierung auf. Diese Schichten werden nicht etwa durch Zusammenfügen mehrerer unterschiedlich dotierter Rohre oder durch Abscheiden von Glasschichten auf der Oberfläche eines Quarzglasrohres erzeugt, sondern direkt bei der Herstellung oder durch eine Nachbehandlung des porösen Rohlings. Das Substratrohr wird durch Verglasen des SiO₂-Rohlings erhalten.

Die Kernglasschicht geht aus einem radialen Teilbereich des porösen Rohlings hervor, dem vor dem Verglasen der die Brechzahl von Quarzglas erhöhende, erste Dotierstoff hinzugefügt worden ist. Der SiO₂-Rohling wird üblicherweise durch Flammenhydrolyse einer siliciumhaltigen Verbindung und Abscheiden von SiO₂-Partikeln auf einem Substrat nach dem sogenannten "Soot-Verfahren" hergestellt. Das Verglasen des porösen SiO₂-Rohlings erfolgt - im Gegensatz zum sogenannten "Direkt-Verglasen" - in einem separaten Sinterprozeß. Aufgrund seiner Porosität läßt sich der SiO₂-Rohling vor dem Verglasen einfach nachbehandeln, wie beispielsweise zum Zweck einer Reinigung, Trocknung oder zum nachträglichen Dotieren. Das Trocknen des porösen SiO₂-Rohlings ermöglicht die Herstellung von Kernglasschichten mit geringem OH-Gehalt.

Anstelle einer Dotierung ausgewählter Teilbereiche, kann der SiO₂-Rohling den ersten Dotierstoff auch über seine gesamte Wandstärke zunächst homogen verteilt enthalten, wobei in einem späteren Verfahrensschritt der erste Dotierstoff aus einem radialen Teilbereich mindestens teilweise entfernt, oder die durch den Dotierstoff bewirkte Brechzahlerhöhung durch einen zweiten Dotierstoff ganz oder teilweise kompensiert, oder sogar überkompensiert, wird. Die Verteilung des Dotierstoffes in der Kernglaschicht kann homogen sein, sie kann auch einen Gradienten, ein Maximum, oder ein Minimum aufwiesen.

Zur Einstellung einer vorgegebenen Oberflächenqualität oder Geometrie des Substratrohres kann eine chemische und mechanische Nachbearbeitung des verglasten Rohlings erfolgen, beispielsweise durch Ätzen und Polieren der Oberflächen, sowie durch Elongieren auf das gewünschte Endmaß. Für den Fall, daß das restliche Kernglas durch Innenabscheidung (MCVD oder PCVD) im Substratrohr erzeugt wird, wird der nach der Innenabscheidung resultierende Verbund aus Substratrohr und Kernglas kollabiert. Es kann gleichzeitig zusätzliches Mantelglas in Form eines sogenannten "Jacketrohres" hinzugefügt werden, und die optische Faser gezogen werden. Für den Fall, daß das restliche Kernglas dem Substratrohr in Form eines Kernglasstabes hinzugefügt wird, wird der daraus resultierende Verbund aus Substratrohr und Kernglasstab miteinander verschmolzen, wobei ebenfalls zusätzliches Mantelglas in Form von Überfangrohren ("Jacketrohr") hinzugefügt werden kann.

Aus einer erfindungsgemäß hergestellten Vorform wird eine optische Faser für die optische Nachrichtentechnik erhalten, in der die Kernglasschicht zur Lichtführung beiträgt. Dabei ist die mindestens eine Kernglasschicht üblicherweise Teil einer komplexen Brechzahlprofils. Insoweit werden Bereiche der Vorform durch das Substratrohr bereitgestellt, die bei den bekannten Verfahren erst bei der Herstellung des Kernglases selbst erzeugt werden. Das Substratrohr selbst kann durch ein kostengünstigeres und produktiveres OVD-Verfahren hergestellt werden. Insoweit werden durch die Erfindung aufwendige und wenig effektive Herstellungsverfahren für die Kernbereiche optischer Fasern durch eine produktivere Herstellungsweise ersetzt. Beispielsweise müßte die durch das Substratrohr bereitgestellte Kernglasschicht beim MCVD-Verfahren durch Innenbeschichtung des Substratrohres zusätzlich erzeugt werden. Anzahl und Dicke der Innenschichten würden dabei - unter Inkaufnahme der oben genannten Nachteile hinsichtlich der Effektivität der Abscheidung- entsprechend vergrößert. Demgegenüber wird bei dem erfindungsgemäßen Verfahren ein Teil der lichtführenden Schichten durch das Substratrohr bereitgestellt. So wird eine produktive und effektive Herstellung großvolumiger Vorformen mit komplexen Brechzahlprofilen ermöglicht. Dabei trägt die durch das Substratrohr bereitgestellte Kernglasschicht zur Lichtführung bei, und gehört insoweit zum Kernbereich der optischen Faser. Die Menge an darüberhinaus hinzuzufügendem Kernglas wird dadurch verringert, wobei als "Kernglas" im Sinne dieser Erfindung das zur Vervollständigung des Kernbereiches erforderliche Quarzglas-Material bezeichnet wird. Das erfindungsgemäße Verfahren ist in erster Linie für die Herstellung von Einmodenfasern, aber auch für die Herstellung von Mehrmodenfasern geeignet.

In einer bevorzugten Verfahrensweise wird der poröse SiO₂-Rohling durch Flammenhydrolyse einer Siliciumverbindung und Abscheiden von SiO₂-Partikeln auf einem Träger gebildet, wobei der erste Dotierstoff während der Abscheidung hinzugefügt wird. Das Substratrohr - inklusive der Kernglasschicht - wird hierbei nach dem OVD-Verfahren hergestellt. Das Hinzufügen des ersten Dotierstoffes erfolgt während des Abscheidens der SiO₂-Partikel, indem der Dotierstoff an sich, oder in Form einer chemischen Verbindung, der Siliciumverbindung hinzugefügt, oder eine den ersten Dotierstoff enthaltende Atmosphäre aufrechterhalten wird. Eine inhomogene Brechungsindexverteilung über die Wandstärke des SiO₂-Rohlings kann durch zeitliche Veränderung der wirksamen Konzentration des Dotierstoffes oder der Temperatur während der Abscheidung erreicht werden, durch nachträgliches Entfernen von erstem Dotierstoff aus einem Teilbereich des SiO₂-Rohlings, oder durch teilweise Kompensation mit einem anderen Dotierstoff.

Das Kernglas kann mittels der Stab-in-Rohr-Technik oder durch Innenabscheidung (MCVD und PCVD) in das Substratrohr eingebracht werden, wobei die zuletzt genannte Variante bevorzugt wird, weil sie die Herstellung hochreiner, insbesondere OH-armer Innenschichten erleichtert.

Besonders effektiv gestaltet sich eine Verfahrenweise, bei der mindestens ein zweiter radialer Teilbereich des porösen SiO₂-Rohlings nach dem Abscheiden und vor dem Verglasen mit einem die Brechzahl von Quarzglas verändernden, zweiten Dotierstoff beladen wird. Der zweite Dotierstoff kann homogen über die Wandstärke des SiO₂-Rohlings verteilt sein. Eine derartige Verteilung des zweiten Dotierstoffes ist durch Imprägnieren des porösen SiO₂-Rohlings mit einer den zweiten Dotierstoff enthaltenden Flüssigkeit oder durch Eindiffusion über die Gasphase besonders einfach und kostengünstig zu realisieren. Dadurch wird die Herstellung komplexer Brechzahlverläufe erleichtert. Nach dem Verglasen kann in der Kernglasschicht des Substratrohres eine Mischdotierung aus erstem und zweitem Dotierstoff vorliegen.

Vorteilhafterweise erfolgt das Beladen des zweiten radialen Teilbereiches durch Erhitzen des SiO₂-Rohlings, wobei dieser einer den zweiten Dotierstoff enthaltenden Atmosphäre ausgesetzt wird. Mittels dieser - im folgenden als Dotierung über die Gasphase bezeichneten Verfahrensweise - ermöglicht ein besonders effektives und homogenes Beladen des porösen SiO₂-Rohlings mit dem zweiten Dotierstoff.

Bevorzugt wird als zweiter Dotierstoff Fluor eingesetzt. Fluor verringert die Brechzahl von Quarzglas. Das Beladen des porösen SiO₂-Rohlings oder eines radialen Teilbereichs davon mit Fluor, erleichtert die Herstellung eines Substratrohres mit komplexem Brechzahlprofil. So kann das Substratrohr nach dem Verglasen eine Mantelglasschicht mit einer Brechzahl aufweisen, die niedriger ist als die von Quarzglas. Ein derartiges Substratrohr ist besonders geeignet für die Herstellung einer optischen, dispersionskompensierenden Einmodenfaser (sogenannte "DC-Faser"). Das Brechzahlprofil dieser Fasern weist im allgemeinen einen Bereich mit niedriger, und einen Bereich mit hoher Brechzahl auf. Im Vergleich zu den bekannten Verfahren ist die Herstellung derartiger Fasern beim erfindungsgemäßen Verfahren besonders effektiv und einfach, indem beide Bereiche vollständig, oder wenigstens teilweise, über das Substratrohr zur Verfügung gestellt werden können.

Vorteilhafterweise wird als erster Dotierstoff eine Germanium enthaltende chemische Verbindung eingesetzt. Germanium liegt im Quarzglas in Form von Germaniumoxid, GeO₂ vor. Germaniumoxid ist wegen seiner Transmissionseigenschaften für die Übertragung von Lichtwellenlängen im infraroten Spektralbereich besonders geeignet.

Als günstig hat es sich erwiesen, die Kernglasschicht auf eine Brechzahl im Bereich von 1,4593 bis 1,490 einzustellen. Dies erlaubt eine besonders kostengünstige und effektive Herstellung von optischen Fasern mit breitem Modenfelddurchmesser, insbesondere bei einer Übertragungswellenlänge um 1550 nm. Unter der Kernglasschicht wird dabei der radiale Teilbereich des Substratrohres verstanden, der eine Brechzahl aufweist, die in den oben angegeben Bereich fällt. Die Brechzahl kann über die gesamte Dicke der Kernglasschicht gleich sein, sie kann aber auch einen beliebigen Verlauf aufweisen.

Hinsichtlich des Substratrohres wird die oben angegeben Aufgabe ausgehend von dem eingangs genannten Substratrohr erfindungsgemäß.dadurch gelöst, daß das Substratrohr eine Kernglasschicht mit einer Brechzahl von mindestens 1,459 umfaßt.

Das erfindungsgemäße Substratrohr umfaßt eine Kernglasschicht. Darunter wird ein radialer Teil der Gesamtwandstärke des Substratrohres verstanden, der eine Brechzahl von mindestens 1,459 aufweist. Die Brechzahl, die bei einer Wellenlänge von 589,3 nm gemessen wird, ist somit höher ist als die von undotiertem Quarzglas, für das in der Literatur Werte zwischen 1,4585 und 1,4589 angegeben werden. Das Substratrohr kann eine oder mehrere Kernglasschichten aufweisen. Außer der Kernglasschicht ist noch mindestens eine weitere Schicht vorgesehen, die sich in ihrer Dotierung von derjenigen der Kernglasschicht unterscheidet. Über seine Wandstärke gesehen, weist das Substratrohr somit mehrere Schichten unterschiedlicher Dotierung auf. Diese Schichten werden nicht etwa durch Zusammenfügen mehrerer unterschiedlich dotierter Rohre oder durch Abscheiden von Glasschichten auf der Oberfläche eines Quarzglasrohres erzeugt, sondern direkt bei der Herstellung oder durch eine Nachbehandlung eines porösen SiO₂-Rohlings. Das Substratrohr wird - wie oben beschrieben - durch Verglasen des SiO₂-Rohlings erhalten, der üblicherweise durch Flammenhydrolyse einer siliciumhaltigen Verbindung und Abscheiden von SiO₂-Partikeln auf einem Substrat nach dem sogenannten "Soot-Verfahren" hergestellt wird. Das Verglasen des porösen SiO₂-Rohlings erfolgt - im Gegensatz zum sogenannten "Direkt-Verglasen" - in einem separaten Sinterprozeß.

Bei einer optischen Faser, die aus einer unter Verwendung des Substratrohres hergestellten Vorform erhalten wird, trägt die Kernglasschicht zur Lichtführung bei, wobei sie üblicherweise Teil eines komplexen Brechzahlprofils ist. Daher werden Bereiche der Vorform durch das Substratrohr bereitgestellt, die bei den bekannten Verfahren ansonsten unter großem Aufwand bei der Herstellung des Kernglases erzeugt werden. Dies erleichtert eine effektive Herstellung großvolumiger Vorformen mit komplexen Brechzahlprofilen. Das Substratrohr selbst kann durch ein kostengünstigeres und produktiveres OVD-Verfahren hergestellt werden. Dabei trägt die durch das Substratrohr bereitgestellte Kernglasschicht zur Lichtführung bei, und gehört insoweit zum Kernbereich der optischen Faser. Die Menge an darüberhinaus hinzuzufügendem Kernglas wird dadurch verringert.

Das erfindungsgemäße Substratrohr kann für die Herstellung einer Vorform für optische Einmodenfasern, als auch für Mehrmodenfasern eingesetzt werden. In jedem Fall wird in das Substratrohr ein Kernglas eingebracht. Dies geschieht üblicherweise nach dem MCVD- oder PCVD-Verfahren durch Abscheidung von Quarzglasschichten auf der Innenwandung des Substratrohres und nachfolgendes Kollabieren des innenbschichteten Substratrohres. Das erfindungsgemäße Substratrohr ist auch zur Herstellung einer Vorform mittles der Stab-in-Rohr-Technik geeignet. Zur Einstellung einer vorgegebenen Oberflächenqualität oder Geometrie des Substratrohres kann eine chemische und mechanische Behandlung erfordrelich sein, beispielsweise durch Ätzen und Polieren der Oberflächen, oder ein Elongieren des Substratrohres auf das gewünschte Endmaß.

Auf die vorstehenden näheren Erläuterungen hierzu im Zusammenhang mit der erfindungsgemäßen Herstellung einer Vorform wird verwiesen.

Vorteilhafterweise ist die Kernglasschicht angrenzend an das Kernglas der Vorform vorgesehen. Dabei wird ein wesentlicher Teil des lichtführenden Bereiches der Vorform vom Substratrohr bereitgestellt, wobei die Kernglasschicht einen Teil eines homogen dotierten, zentralen Kernglasbereiches bilden, oder einen Teil eines komplexen Brechzahlprofils bereitstellen kann. Je nachdem können die Brechungsindices von Kernglasschicht und angrenzendem Kernglas identisch oder verschieden sein.

Als besonders günstig hat es sich erwiesen, wenn das Substratrohr eine Mantelglasschicht aus fluordotiertem Quarzglas umfaßt. Ein derartiges Substratrohr ist besonders geeignet für die Herstellung einer optischen, dispersionskompensierenden Einmodenfaser (sogenannter "DC-Faser"). Das Brechzahlprofil dieser Fasern weist im allgemeinen einen Bereich mit niedriger, und einen Bereich mit hoher Brechzahl auf. Im Vergleich zu den bekannten Verfahren ist die Herstellung derartiger Fasern beim erfindungsgemäßen Verfahren besonders effektiv und einfach, indem beide Bereiche vollständig, oder wenigstens teilweise, über das Substratrohr zur Verfügung gestellt werden können.

Vorteilhafterweise enthält die Kernglasschicht Germanium. Germanium erhöht die Brechzahl von Quarzglas, wobei es im Quarzglas in Form von GeO₂ vorliegt. Germaniumoxid ist wegen seiner Transmissionseigenschaften für die Übertragung von Lichtwellenlängen im infraroten Spektralbereich besonders geeignet.

Als günstig hat sich eine Kernglasschicht mit einer Brechzahl im Bereich von 1,4593 bis 1,490 erwiesen. Ein derartiges Substratrohr ermöglicht eine besonders kostengünstige und effektive Herstellung von optischen Fasern mit breitem Modenfelddurchmesser bei einer Übertragungswellenlänge um 1550 nm. Unter der Kernglasschicht wird dabei der radiale Teilbereich des Substratrohres verstanden, der eine Brechzahl aufweist, die in den oben angegeben Bereich fällt, unabhängig davon, ob die Brechzahl über die gesamte Dicke der Kernglasschicht gleich ist, oder einen anderen Verlauf aufweist.

Insbesondere im Hinblick auf eine geringe Dämpfung der unter Verwendung des erfindungsgemäßen Substratrohre hergestellten Fasern im infraroten Wellenlängenbereich ist es vorteilhaft, wenn der Gehalt an Hydroxylionen in der Kernglasschicht maximal 1 Gew.-ppm beträgt. Da Hydroxylgruppen im infraroten Wellenlängenbereich absorbieren, ist ein geringer OH-Gehalt für Anwendungen optischer Fasern besonders wichtig, bei denen es auf eine geringe Absorption in diesem Wellenlängenbereich ankommt. Dies gilt beispielsweise für Übertragungswellenlängen um 1310 nm, um 1550 nm oder im dazwischenliegenden Wellenlängenbereich, die in der optischen Nachrichtentechnik verwendet werden.

Besonders bewährt hat sich eine Ausführungsform des erfindungsgemäßen Substratrohres, bei dem benachbart zur Kernglasschicht eine Diffusionssperrschicht vorgesehen ist. Die Diffusionssperrschicht erleichtert die Herstellung von Brechzahlprofilen mit Stufenform, indem sie bei einer nachträglichen Behandlung des porösen SiO₂-Rohlings in einer einen Dotierstoff enthaltenden Atmosphäre eine unerwünschte Eindiffusion des Dotierstoffes in Teilbereiche jenseits der Diffusionssperrschicht behindert. Es können auch mehrere Diffusionssperrschichten vorhanden sein. Die Diffusionssperrschicht wird auf einfache Art und Weise beispielsweise durch bereichsweise Verdichtung des SiO₂-Rohlings während des Abscheidens gebildet.

Nachfolgend wird die Erfindung anhand von Ausführungsbeispielen und einer Zeichnung näher erläutert. In der Zeichnung zeigen im einzelnen in schematischer Darstellung
- **Figur 1a**: ein erstes Brechzahlprofil einer optischen Einmodenfaser, die aus einer erfindungsgemäß hergestellten Vorform erhalten wurde,
- **Figur 1b**: ein erfindungsgemäßes Substratrohr zur Herstellung der Faser mit dem Brechzahlprofil gemäß Figur 1a,
- **Figur 2a**: ein zweites Brechzahlprofil einer optischen Einmodenfaser, die aus einer erfindungsgemäß hergestellten Vorform erhalten wurde,
- **Figur 2b**: eine weitere Ausführungsform eines erfindungsgemäßen Substratrohres zur Herstellung der Faser mit dem Brechzahlprofil gemäß Figur 2a,
- **Figur 3a**: ein drittes Brechzahlprofil einer optischen Einmodenfaser, die aus einer erfindungsgemäß hergestellten Vorform erhalten wurde, und
- **Figur 3b**: eine weitere Ausführungsform eines erfindungsgemäßen Substratrohres zur Herstellung der Faser mit dem Brechzahlprofil gemäß Figur 3a.

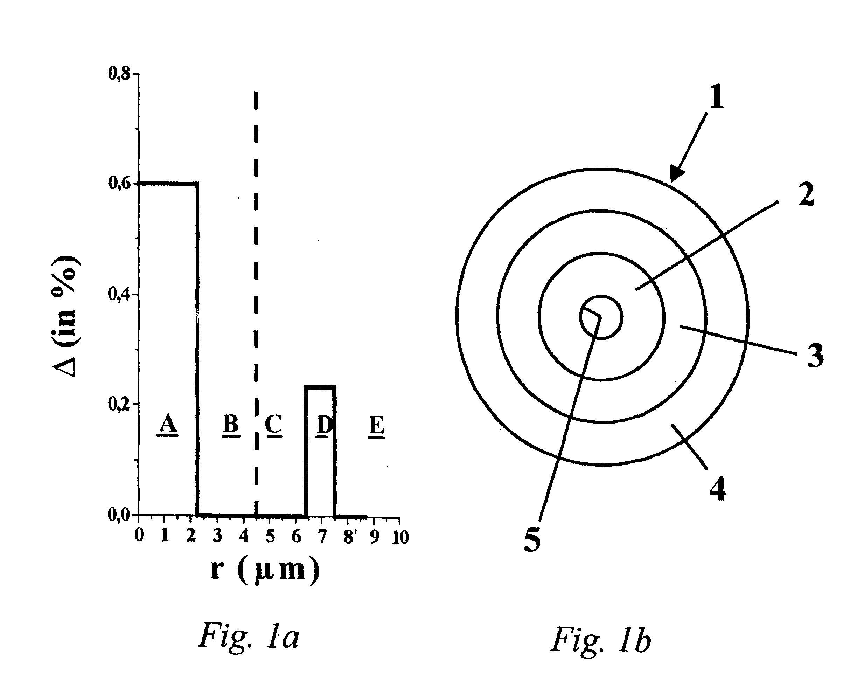

Bei den nachfolgend anhand der Figuren 1 a, 2a und 3a näher erläuterten Brechzahlprofilen ist auf der y-Achse jeweils eine relative Brechzahldifferenz Δ=(n1-n2)/n2 [in %] aufgetragen, wobei n1 die absolute Brechzahl im entsprechenden lichtführenden Bereich der optischen Faser bezeichnet. Der Bezugspunkt n2 entspricht der Brechzahl im Außenmantelbereich der jeweiligen optischen Faser, der in den folgenden Ausführungsbeispielen jeweils 1,4589 bei 589,3 nm beträgt. Auf der x-Achse ist der Faserradius in µm angegeben.

Das Brechzahlprofil gemäß **Figur 1a** ist typisch für eine sogenannte "LEAF-Faser" (large effective area fiber). Eine derartige Faser ist in der EP-A2 775 924 beschrieben. Das Brechzahlprofil führt im Vergleich zu einer dispersionsverschobenen Faser zu einem vergrößerten Modenfelddurchmesser, und dadurch zu einer geringeren mittleren Energiedichte in der optischen Faser. Dies ist wünschenswert zur Verringerung nichtlinearer Effekte, wie der sogenannten Selbstphasenmodulation (SPM). Darüberhinaus bewirkt das Profil eine geringere Dispersionssteigung

Das Brechzahlprofil zeichnet sich durch insgesamt 5 Kernsegmente aus. Im inneren Kernsegment A mit einem Durchmesser von ca. 4,5 µm (Radius 2,25 µm) beträgt die relative Brechzahldifferenz Δ = 0,6. Im nach außen hin daran anschließenden Kernsegment B, mit einer Schichtdicke von 2,25 µm, beträgt die relative Brechzahldifferenz Δ = 0 (dort gilt: n1 = n2). Auf das Kernsegment B folgt das Kernsegment C, das eine Schichtdicke von 1,875 µm und eine relative Brechzahldifferenz Δ = 0 aufweist. Die relative Brechzahldifferenz des Kernsegmentes D liegt bei Δ = 0,234 und seine Schichtdicke bei 1,125 µm. Das Kernsegment D ist wiederum von einem Kernsegment E mit einer relative Brechzahldifferenz Δ = 0 umgeben, das eine Schichtdicke von 1,18 µm aufweist. Auf das Kernsegment E folgt der äußere optische Mantelbereich der Faser, der aus undotiertem Quarzglas besteht.

Die Kernsegmente C, D und E werden durch ein erfindungsgemäßes Substratrohr bereitgestellt, die Kernsegmente A und B werden im Substratrohr durch Innenabscheidung erzeugt. Die Grenzfläche zwischen den Kernsegmenten B und C ist in Figur 1a durch eine gestrichelte Linie angedeutet.

Das für die Herstellung der Faser mit diesem Brechzahlprofil eingesetzte Substratrohr ist schematisch in **Figur 1b** dargestellt. Das Substratrohr 1 hat einen Außendurchmesser von 25 mm und eine Gesamtwandstärke von 3 mm. Die innere Schicht 2 des Substratrohres 1 besteht aus undotiertem Quarzglas mit einer Brechzahl von ca. 1,4589 bei 589,3 nm. Die Dicke der inneren Schicht 2 beträgt 1,21 mm. Daran schließt sich eine mit ca. 3 Gew-% GeO₂ dotierte Zwischenschicht 3 an, wodurch die oben genannte Erhöhung der normierten Brechzahl von Δ = 0,234 im Kernsegment D resultiert. Die Schichtdicke der Zwischenschicht 3 beträgt 0,84 mm. Die äußere Schicht 4 des Substratrohres 1, die eine Dicke von 0,95 mm aufweist, besteht wiederum aus undotiertem Quarzglas. Bei dem Brechzahlprofil der unter Verwendung des Subtratrohres 1 erhaltenen optischen Faser entspricht das Kernsegment C der inneren Schicht 2, das Kernsegment D der Zwischenschicht 3, und das Kernsegment E der äußeren Schicht 4.

Das Substratrohr 1 wird nach dem OVD-Verfahren hergestellt. Hierzu werden mittels Flammenhydrolyse von SiCl₄ nach dem bekannten Verfahren SiO₂-Partikel erzeugt und auf einem rotierenden Dorn schichtweise abgeschieden. Die Germanium-dotierte Zwischenschicht 3 wird dadurch erhalten, daß dem SiCl₄ während der Abscheidung der Zwischenschicht GeCl₄ beigemengt werden. Es wird ein poröser SiO₂/GeO₂-Sootkörper erhalten. Zur Entfernung von Hydroxylgruppen auf einen Wert von unter 30 Gew.-ppb wird der so hergestellte Sootkörper einer Chlorbehandlung bei erhöhter Temperatur unterzogen. Anschließend wird der poröse SiO₂-Sootkörper unter Bildung eines Hohlzylinders verglast. Die Oberflächen des Hohlzylinders werden mechanisch geglättet und anschließend chemisch geätzt. Der derart vorbehandelte Hohlzylinder wird dann auf das Substratrohr-Endmaß elongiert.

Zur Herstellung der Vorform für die optische Faser mit dem in Figur 1a dargestellten Brechzahlprofil wird auf der Innenwandung 5 des Substratrohres 1 gemäß Figur 1b zunächst mittels MCVD-Verfahren eine undotierte SiO₂-Schicht mit einer Dicke von etwa 1,01 mm abgeschieden und dabei direkt verglast. Anschließend wird eine Ge-dotierte Schicht mit einer Dicke von 0,37mm erzeugt, indem dem Ausgangsmaterial GeCl₄ beigemengt wird, derart, daß ein Quarzglas mit einer Germanium-Konzentration von etwa 9 Gew.-% erhalten wird. Dies führt zu einer Brechzahlerhöhung von ca. 9x10⁻³, die dem in Figur 1a gezeigten Kernsegment A entspricht.

Anschließend wird das innenbeschichtete Substratrohr 1 kollabiert. Der so hergestellte Kernstab weist einen Außendurchmesser von 19 mm auf. Er wird mit einem Außenrohr aus undotiertem Quarzglas überfangen. Die so hergestellte Vorform hat einen Außendurchmesser von etwa 137 mm. Daraus werden optische Fasern mit einem Außendurchmesser von 125 µm und mit dem in Figur 1a gezeigten Brechzahlprofil im Kernbereich gezogen.

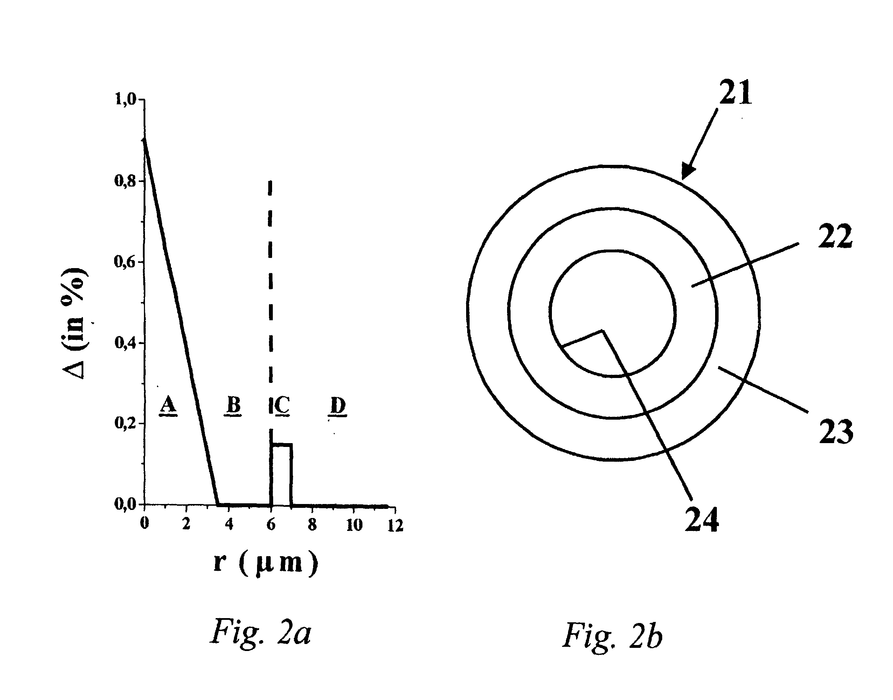

Das Brechzahlprofil gemäß Figur 2a zeigt eine Variante des in Figur 1a dargestellten Faserdesigns. Dieses Brechzahlprofil führt ebenfalls zu einem vergrößerten Modenfelddurchmesser, und dadurch zu einer geringeren mittleren Lichtintensität in der optischen Faser. Eine derartige Faser ist ebenfalls in der EP-A2 775 924 beschrieben.

Das Brechzahlprofil gemäß Figur 2a weist insgesamt vier Kernsegmente aus. Im inneren Kernsegment A, mit einem Durchmesser von ca. 7 µm (Radius 3,5 µm), nimmt die relative Brechzahldifferenz Δ von einem Maximalwert von 0,9 (entspricht etwa 13 x 10⁻³ über n2, bei n2 = 1,4589) linear auf Null ab. Im darauf folgenden Kernsegment B, mit einer Schichtdicke von 2,5 µm, beträgt die relative Brechzahldifferenz Δ = 0 (die absolute Brechzahl ist dort = n2). Das dritte Kernsegment C hat eine Schichtdicke von 1 µm, innerhalb von der die relative Brechzahldifferenz 0,1485 eingestellt ist. Im sich daran nach außen anschließenden vierten Kernsegment D beträgt die relative Brechzahldifferenz wiederum Null (absolut n2), und die Schichtdicke 4,08 µm.

Die Kernsegmente C und D werden durch ein erfindungsgemäßes Substratrohr bereitgestellt,. Die Kernsegmente A und B werden in diesem Substratrohr durch Innenabscheidung erzeugt. Die Grenzfläche zwischen äußerem und innerem Teil der Kernsegmente ist in Figur 2a durch eine gestrichelte Linie angedeutet.

Das für die Herstellung der Faser mit dem Brechzahlprofil gemäß Figur 2a eingesetzte Substratrohr ist schematisch in Figur 2b dargestellt. Das Substratrohr 21 hat einen Außendurchmesser von 25 mm und eine Gesamtwandstärke von 3 mm. Die innere Schicht 22 des Substratrohres 21 besteht aus Germanium-dotiertem Quarzglas. Die Dicke der inneren Schicht 22 beträgt etwa 0,45 mm, die Germaniumkonzentration etwa 2 Gew.-%, wodurch die in Figur 2a im Kernsegment C dargestellte Brechzahlerhöhung resultiert. Die äußere Schicht 23 des Substratrohres 21, die eine Dicke von 2,55 mm aufweist, besteht wiederum aus undotiertem Quarzglas. Bei dem Brechzahlprofil der unter Verwendung des Subtratrohres 21 erhaltenen optischen Faser entsteht das Kernsegment C somit aus der inneren Schicht 22, und das Kernsegment D aus der äußeren Schicht 23.

Das Substratrohr 21 wird nach dem OVD-Verfahren hergestellt. Hierzu werden mittels Flammenhydrolyse von SiCl₄ nach dem bekannten Verfahren SiO₂-Partikel erzeugt und auf einem rotierenden Dorn schichtweise abgeschieden. Die Germanium-dotierte innere Schicht 22 wird dadurch erhalten, daß dem SiCl₄ während der Abscheidung der inneren Schicht GeCl₄ beigemengt wird. Nachdem eine die der inneren Schicht 22 entsprechende Schichtdicke von Germanium-dotiertem Sootmaterial abgeschieden ist, wird die Zufuhr von GeCl₄ gestoppt, und weiter undotiertes Sootmaterial aufgebaut. Es wird ein poröser SiO₂-Sootkörper erhalten. Nach dem Entfernen des Trägers wird der so hergestellte Sootkörper einer Chlorbehandlung bei erhöhter Temperatur unterzogen, um den Hydroxylgruppen-Gehalt auf einen Wert von unter 30 Gew.-ppb zubringen. Anschließend wird der poröse, dehydratisierte SiO₂-Sootkörper unter Bildung des Substratrohres 21 verglast. Innere und äußere Oberflächen des Substratrohres 21 werden abschließend mechanisch geglättet und chemisch geätzt.

Zur Herstellung der Vorform für die optische Faser mit dem in Figur 2a dargestellten Brechzahlprofil wird auf der Innenwandung 24 des Substratrohres 21 gemäß Figur 2b zunächst mittels MCVD-Verfahren eine undotierte SiO₂-Schicht mit einer Dicke von etwa 0,88 mm abgeschieden und dabei direkt verglast. Anschließend wird eine Ge-dotierte Schicht mit einer Dicke von 0,49 mm erzeugt, indem dem Ausgangsmaterial GeCl₄ beigemengt wird. Der Brechzahlverlauf im Kernsegment A (Figur 2a) wird durch einen entsprechenden Konzentrationsgradienten an GeO₂ in der Ge-dotierten Schicht erzeugt.

Anschließend wird das innenbeschichtete Substratrohr 21 kollabiert. Der so hergestellte Kernstab weist einen Außendurchmesser von 19 mm auf. Er wird mit einem Außenrohr aus undotiertem Quarzglas überfangen. Die so hergestellte Vorform hat einen Außendurchmesser von etwa 103 mm. Daraus werden optische Fasern mit einem Außendurchmesser von 125 um und mit dem in Figur 2a gezeigten Brechzahlprofil im Kernbereich gezogen.

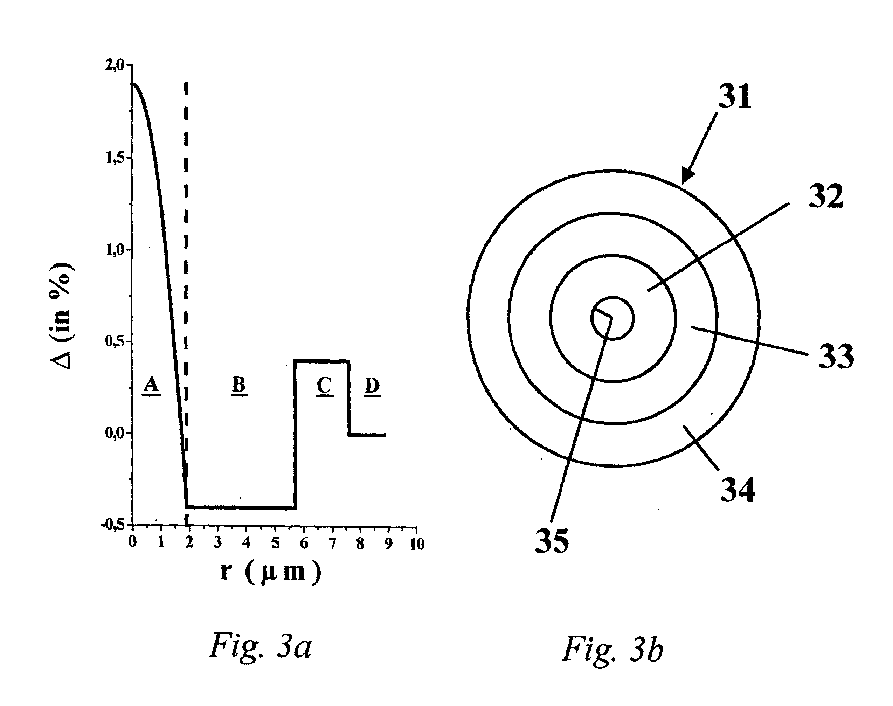

Das in Figur 3a dargestellte Brechzahlprofil ist typisch für eine sogenannte "DC-Faser". Eine derartige Einmodenfaser ist in der EP-A2 598 554 beschrieben. Die DC-Faser zeichnet sich durch eine starke negative Dispersion bei einer Übertragunsgwellenlänge von 1550 nm aus. Sie wird eingesetzt, um die positive Dispersion bei 1550 nm von Standard-Einmodenfasern zu kompensieren, die in der Literatur mit ca. 17 ps/(nm·km) angegeben wird. Damit können hohe Übertragungsraten auch mit Standard-Einmodenfasern bei einer Übertragungswellenlänge von 1550 nm erreicht werden.

Das Brechzahlprofil zeichnet sich durch insgesamt 4 Kernsegmente aus. Innerhalb eines inneren Kernsegment A mit einem Durchmesser von ca. 3,8 µm (Radius 1,9 µm) nimmt die relative Brechzahldifferenz parabolisch von einem Maximalwert Δ = 1,9 auf 0 ab. Im daran nach außen hin anschließenden Kernsegment B, mit einer Schichtdicke von 3,8 µm, beträgt die relative Brechzahldifferenz Δ = -0,4 . Auf das Kernsegment B folgt das Kernsegment C, das eine Schichtdicke von 1,9 µm und eine relative Brechzahldifferenz Δ = 0,4 aufweist. Die relative Brechzahldifferenz des Kernsegmentes D beträgt wiederum 0 und seine Schichtdicke 1,49 µm. Auf das Kernsegment D folgt der äußere optische Mantelbereich der Faser, der aus undotiertem Quarzglas besteht.

Die Kernsegmente B, C und D werden durch ein erfindungsgemäßes Substratrohr bereitgestellt. Die Grenzfläche zwischen den Kernsegmenten A und B ist in Figur 3a durch die gestrichelte Linie angedeutet.

Eine erste Ausführungsform des für die Herstellung der Faser mit dem Brechzahlprofil gemäß Figur 3a eingesetzten Substratrohres ist schematisch in **Figur 3b** dargestellt. Nachfolgend wird das Substratrohr sowie ein Verfahren für seine Herstellung näher beschrieben.

Das Substratrohr 31 hat einen Außendurchmesser von 25 mm und eine Gesamtwandstärke von 3 mm. Die innere Schicht 32 des Substratrohres 31 besteht aus fluordotiertem Quarzglas mit einer um 5,8 x 10⁻³ niedrigeren Brechzahl als reines Quarzglas. Die Fluorkonzentration im Kernsegment B beträgt etwa 2 Gew.-%, und die Schichtdicke 1,19 mm. Daran schließt sich eine mit ca. 10 Gew-% GeO₂ und gleichzeitig mit 2 Gew.-% Fluor dotierte Zwischenschicht 33 an, wodurch die oben genannte Erhöhung der Brechzahl von Δ = 0,4 im Kernsegmnet C resultiert. Die Schichtdicke der Zwischenschicht 33 beträgt 0,95 mm. Die äußere Schicht 34 des Substratrohres 31, die eine Dicke von 0,86 mm aufweist, besteht ebenfalls aus Quarzglas mit einer Mischdotierung von Fluor- und Germanium, wobei die Fluorkonzentration 2 Gew.-% beträgt und die GeO₂-Konzentration 5 Gew.-%. Die brechzahlanhebende Wirkung von GeO₂ und die brechzahlabsenkende Wirkung von Fluor resultiert bei den oben genannten Konzentrationen dieser Dotierstoffe in einer Brechzahlveränderung von 0 gegenüber undotiertem Quarzglas. Bei dem Brechzahlprofil der unter Verwendung des Subtratrohres 31 erhaltenen optischen Faser entspricht das Kernsegment B der inneren Schicht 32, das Kernsegment C der Zwischenschicht 33, und das Kernsegmnet D der äußeren Schicht 34.

Das Substratrohr 31 wird nach dem OVD-Verfahren hergestellt. Hierzu werden mittels Flammenhydrolyse von SiCl₄ nach dem bekannten Verfahren SiO₂-Partikel erzeugt und auf einem rotierenden Dorn schichtweise abgeschieden. Während der Abscheidung von Zwischenschicht 33 und äußerer Schicht 34 wird GeCl₄ beigemengt. Es wird ein poröser SiO₂/GeO₂-Sootkörper erhalten.

Anschließend wird der poröse SiO₂-Sootkörper in einer Fluor enthaltenden Atmosphäre auf eine Temperatur von etwa 800 °C erhitzt und dabei über seine gesamte Wandstärke homogen mit Fluor dotiert. Gleichzeitig wird dadurch der Hydroxylgruppen-Gehalt gesenkt.

Der poröse SiO₂-Sootkörper wird dann unter Bildung eines Hohlzylinders verglast. Die Oberflächen des Hohlzylinders werden mechanisch geglättet und anschließend chemisch geätzt. Der derart vorbehandelte Hohlzylinder wird auf das Substratrohr-Endmaß elongiert.

Im folgenden wird eine zweite Ausführungsform eines Substratrohres für die Herstellung der Faser mit dem Brechzahlprofil gemäß Figur 3a, sowie ein Verfahren für seine Herstellung näher beschrieben.

Das Substratrohr hat einen Außendurchmesser von 25 mm und eine Gesamtwandstärke von 3 mm. Die innere Schicht des Substratrohres besteht aus fluordotiertem Quarzglas mit einer um 5,8 x 10⁻³ niedrigeren Brechzahl als reines Quarzglas. Die Fluorkonzentration im Kernsegment B beträgt etwa 1 Gew.-%. Die Schichtdicke ist 1,19 mm. Daran schließt sich eine mit ca. 5,4 Gew-% GeO₂ dotierte Zwischenschicht an, wodurch die in Figur 3a gezeigte Erhöhung der Brechzahl Δ = 0,4 im Kernsegment C resultiert. Die Schichtdicke der Zwischenschicht beträgt 0,95 mm. Die äußere Schicht des Substratrohres, die eine Dicke von 0,86 mm aufweist, besteht aus undotiertem Quarzglas. Bei dem Brechzahlprofil der unter Verwendung dieses Subtratrohres erhaltenen optischen Faser entspricht das Kernsegment B der inneren Schicht, das Kernsegment C der Zwischenschicht, und das Kernsegment D der äußeren Schicht.

Nachfolgend wird ein Verfahren zur Herstellung dieser Ausführungsform des erfindungsgemäßen Substratrohres beschrieben. Das Substratrohr wird nach dem OVD-Verfahren hergestellt. Hierzu werden mittels Flammenhydrolyse von SiCl₄ nach dem bekannten Verfahren SiO₂-Partikel erzeugt und auf einem rotierenden Dorn unter Einsatz von Abscheidebrennern schichtweise abgeschieden. Die Oberflächentemperatur des sich bildenden Sootkörpers beträgt während der Abscheidung ca. 1400 °C. Zur Erzeugung der inneren Schicht wird SiCl₄ eingesetzt, dem während der Abscheidung der Zwischenschicht GeCl₄ beigemengt wird. Für die Erzeugung der äußeren Schicht wird die GeCl₄ -Zufuhr wieder gestoppt. Es wird so ein poröser SiO₂-Sootkörper mit einer Germanium-dotierten Zwischenschicht erhalten. Eine Besonderheit des Verfahrens besteht darin, daß unmittelbar vor Abscheidung der Zwischenschicht eine Diffusionssperrschicht mit einer Dicke von ca. 0,5 mm erzeugt wird. In der Diffusionssperrschicht weist der SiO₂-Sootkörper eine höhere Dichte auf. Dies wird erreicht, indem während der Abscheidung der die Diffusionssperrschicht bildenden Soot-Schichten eine höhere Oberflächentemperatur des sich bildenden SiO₂-Sootkörpers von ca. 1600 °C aufrechterhalten wird. Hierzu wird die Zufuhr der Brenngase zu den Abscheidebrennern entsprechend erhöht.

Zur Herstellung der inneren, mit Fluor dotierten Schicht wird der poröse SiO₂-Sootkörper erhitzt und dabei ein fluorhaltiges Gas durch seine Innenbohrung geleitet. Die Eindiffusion des fluorhaltigen Gases in die Germanium-dotierte Zwischenschicht wird durch die Diffusionssperrschicht behindert. Dadurch wird lediglich die innere Schicht mit Fluor beladen, jedoch nicht Zwischenschicht und äußere Schicht. Durch die Behandlung mit einem fluorhaltigen Gases wird gleichzeitig die OH-Konzentration in der inneren Schicht auf einen Wert unterhalb von 50 ppb gesenkt.

Anschließend wird der poröse SiO₂-Sootkörper unter Bildung des Substratrohres verglast. Die Oberflächen des Substratrohres werden mechanisch geglättet und anschließend chemisch geätzt.

Zur Herstellung der Vorform für die optische Faser mit dem in Figur 3a dargestellten Brechzahlprofil wird das das Kernsegment A (Figur 3a) bildende Kernglas durch MCVD-Innenabscheidung im Substratrohr erzeugt. Nachfolgend wird die diese anhand Figur 3b näher erläutert:

Auf der Innenoberfläche 35 des Substratrohres 31 gemäß Figur 3b wird mittels MCVD-Verfahren eine mit GeO₂ dotierte SiO₂-Schicht abgeschieden und direkt verglast. Dabei wird die Beimengung von GeCl₄ im Verlauf der Abscheidung kontinuierlich erhöht, so daß sich ein GeO₂-Konzentrationsprofil einstellt, das dem in Figur 3a gezeigten parabolischen Brechzahlprofil in Kernsegment A entspricht. Die so erzeugte Ge-dotierte Schicht hat eine Dicke von 0,16 mm. Die Germanium-Konzentration der Schicht beträgt im Maximum etwa 30 Gew.-%, was zu einer Brechzahlerhöhung von ca. 30x10⁻³ führt, wie dies in Figur 3a gezeigt ist.

Anschließend wird das derart innenbeschichtete Substratrohr kollabiert. Der so hergestellte Kernstab weist einen Außendurchmesser von 16,6 mm auf. Er wird mit einem Außenrohr aus undotiertem Quarzglas überfangen. Die so hergestellte Vorform hat einen Außendurchmesser von etwa 114 mm. Daraus werden optische Fasern mit einem Außendurchmesser von 125 µm und mit dem in Figur 3a gezeigten Brechzahlprofil im Kernbereich gezogen.

## Patentansprüche

1. Verfahren zur Herstellung einer Vorform für eine optische Faser für die optische Nachrichtentechnik, durch Bereitstellen eines Quarzglas-Substratrohres, das in radialer Richtung Bereiche unterschiedlicher Dotierung aufweist, Einbringen eines Kernglases aus synthetischem Quarzglas in das Substratrohr, und Überfangen des Substratrohres mit einem Mantelglas-Rohr, **dadurch gekennzeichnet, daß** ein durch Verglasen eines rohrförmigen, porösen SiO₂-Rohlings erhaltenes Substratrohr eingesetzt wird, das mit einer Kernglasschicht versehen ist, die erzeugt wird, indem einem ersten radialen Teilbereich des SiO₂-Rohlings vor dem Verglasen ein die Brechzahl von Quarzglas erhöhender erster Dotierstoff hinzugefügt wird.

2. Verfahren nach Anspruch 1, **dadurch gekennzeichnet, daß** der poröse SiO₂-Rohling durch Flammenhydrolyse einer Siliciumverbindung und Abscheiden von SiO₂-Partikeln auf einem Träger gebildet wird, und daß der erste Dotierstoff während der Abscheidung hinzugefügt wird.

3. Verfahren nach Anspruch 1oder 2, **dadurch gekennzeichnet, daß** das Kernglas durch innenabscheidung in das Substratrohr eingebracht wird.

4. Verfahren nach einem der vorhergehenden Ansprüche, **dadurch gekennzeichnet, daß** mindestens ein zweiter radialer Teilbereich des porösen SiO₂-Rohlings nach dem Abscheiden und vor dem Verglasen mit einem die Brechzahl von Quarzglas veränderndem, zweiten Dotierstoff beladen wird.

5. Verfahren nach Anspruch 4, **dadurch gekennzeichnet, daß** zum Beladen des zweiten radialen Teilbereiches, der SiO₂-Rohling erhitzt und dabei einer den zweiten Dotierstoff enthaltenden Atmosphäre ausgesetzt wird.

6. Verfahren nach Anspruch 3 oder 4, **dadurch gekennzeichnet, daß** als zweiter Dotierstoff Fluor eingesetzt wird.

7. Verfahren nach einem der vorhergehenden Ansprüche, **dadurch gekennzeichnet, daß** als erster Dotierstoff eine Germanium enthaltende chemische Verbindung eingesetzt wird.

8. Verfahren nach einem der vorhergehenden Ansprüche, **dadurch gekennzeichnet, daß** die Kernglasschicht auf eine Brechzahl im Bereich von 1,459 bis 1,490 eingestellt wird.

9. Substratrohr aus Quarzglas für die Herstellung einer Vorform für eine optische Faser für die optische Nachrichtentechnik, wobei die Vorform ein Kernglas aufweist, das von einem Mantelglas umgeben ist, von dem mindestens ein Teil in Form des Substratrohres, das in radialer Richtung Bereiche unterschiedlicher Dotierung aufweist, bereitgestellt wird, **dadurch gekennzeichnet, daß** das Substratrohr eine Kernglasschicht mit einer Brechzahl von mindestens 1,459 umfaßt.

10. Substratrohr nach Anspruch 9, **dadurch gekennzeichnet, daß** die Kernglasschicht angrenzend an das Kernglas der Vorform vorgesehen ist.

11. Substratrohr nach Anspruch 9 oder 10, **dadurch gekennzeichnet, daß** das Substratrohr eine Mantelglasschicht aus fluordotiertem Quarzglas umfaßt.

12. Substratrohr nach einem der vorhergehenden Ansprüche 9 bis 11, **dadurch gekennzeichnet, daß** die Kernglasschicht Germanium enthält.

13. Substratrohr nach einem der vorhergehenden Ansprüche 9 bis 12, **dadurch gekennzeichnet, daß** die Kernglasschicht zusätzlich Fluor enthält.

14. Substratrohr nach einem der vorhergehenden Ansprüche 9 bis 13, **dadurch gekennzeichnet, daß** die Kernglasschicht eine Brechzahl im Bereich von 1,4593 bis 1,490 aufweist.

15. Substratrohr nach einem der vorhergehenden Ansprüche 9 bis 14, **dadurch gekennzeichnet, daß** der Gehalt an Hydroxylionen in der Kernglasschicht maximal 1 Gew.-ppm beträgt.

16. Substratrohr nach einem der vorhergehenden Ansprüche 9 bis 15, **dadurch gekennzeichnet, daß** benachbart zur Kernglasschicht eine Diffusionssperrschicht vorgesehen ist.

## Claims

1. Process for producing a preform for an optical fiber for optical data communications technology by providing a quartz glass substrate tube which has in radial direction regions with different dopants, introducing a core made of synthetic quartz glass into the substrate tube, and jacketing the substrate tube with a jacket tube, **characterized in that** use is made of a substrate tube formed by the vitrification of a tubular, porous SiO₂ blank where the substrate tube is provided with a core glass layer which is produced by adding to a first radial portion of the SiO₂ blank prior to vitrification a first dopant which raises the refractive index of quartz glass.

2. Process according to claim 1, **characterized in that** the porous SiO₂ blank is formed on a carrier by flame hydrolysis of a silicon compound and deposition of SiO₂ particles, and **in that** the first dopant is added during the deposition.

3. Process according to claim 1 or 2, **characterized in that** the core glass is introduced into the substrate tube by internal deposition.

4. Process according to one of the preceding claims, **characterized in that** at least a second radial zone of the porous SiO₂ blank is doped, after deposition and before vitrification, with a second dopant which alters the refractive index of quartz glass.

5. Process according to claim 4, **characterized in that** for the doping of the second radial portion, the SiO₂ blank is heated and is at the same time exposed to an atmosphere which contains the second dopant.

6. Process according to claim 3 or 4, **characterized in that** fluorine is used as the second dopant.

7. Process according to one of the preceding claims, **characterized in that** a chemical compound containing Germanium is used as the first dopant.

8. Process according to one of the preceding claims, **characterized in that** the core glass layer is adjusted to a refraction index in the range from 1.459 to 1.490.

9. Substrate tube made of quartz glass for the production of an optical fiber preform for optical data communications technology whereby the preform has core glass which is surrounded by a mantle glass of which at least a portion is provided in the form of a substrate tube which has in the radial direction different dopants, **characterized in that** the substrate tube has a core glass layer having a refraction index of at least 1.459.

10. Substrate tube according to claim 9, **characterized in that** the core glass layer is provided adjoining to a core glass of the preform.

11. Substrate tube according to claim 9 or 10, **characterized in that** the substrate tube comprises a cladding layer made of fluorine-doped quartz glass.

12. Substrate tube according to one of the preceding claims 9 through 11, **characterized in that** the core glass layer contains Germanium.

13. Substrate tube according to one of the preceding claims 9 through 12, **characterized in that** the core glass layer additionally contains Fluorine.

14. Substrate tube according to one of the preceding claims 9 through 13, **characterized in that** the core glass layer has an index of refraction in the range from 1.4593 to 1.490.

15. Substrate tube according to one of the preceding claims 9 through 14, **characterized in that** the hydroxyl ion content in the core glass layer is max. 1 ppm by weight.

16. Substrate tube according to one of the preceding claims 9 through 15, **characterized in that** a diffusion-blocking layer is provided adjacent to the core glass layer.

## Revendications

1. Procédé pour fabriquer une préforme pour une fibre optique pour la technique optique de transmission d'informations, par préparation d'un tube formant substrat en verre quartzeux, qui possède des zones ayant des dopages différents dans une direction radiale, insertion d'un verre formant coeur en verre quartzeux synthétique dans le tube formant substrat et recouvrement du tube formant substrat avec un tube de verre enveloppe, **caractérisé en ce qu'**on utilise un tube formant substrat qui est obtenu par vitrification d'une ébauche de forme tubulaire en SiO₂ poreux, qui est pourvue d'une couche de verre de coeur, que l'on obtient en ajoutant avant la vitrification, à une première partie radiale de l'ébauche en SiO₂, une première substance dopante qui augmente l'indice de réfraction du verre quartzeux.

2. Procédé selon la revendication 1, **caractérisé en ce qu'**on forme l'ébauche en SiO₂ poreux par hydrolyse à la flamme d'un composé de silicium et dépôt de particules de SiO₂ sur un support, et qu'on ajoute la première substance dopante pendant le dépôt.

3. Procédé selon la revendication 1 ou 2, **caractérisé en ce qu'**on introduit le verre quartzeux par dépôt interne dans le tube formant substrat.

4. Procédé selon l'une des revendications précédentes, **caractérisé en ce qu'**on charge au moins une seconde partie radiale de l'ébauche en SiO₂ poreux, après le dépôt et avant la vitrification, avec une seconde substance dopante modifiant l'indice de réfraction du verre quartzeux.

5. Procédé selon la revendication 4, **caractérisé en ce que** pour charger la seconde zone partielle radiale, on chauffe l'ébauche en SiO₂ et on le soumet à une atmosphère contenant la seconde substance dopante.

6. Procédé selon la revendication 3 ou 4, **caractérisé en ce qu'**on utilise du fluor comme seconde substance dopante.

7. Procédé selon l'une des revendications précédentes, **caractérisé en ce qu'**on utilise comme première substance dopante un composé chimique contenant du germanium.

8. Procédé selon l'une des revendications précédentes, **caractérisé en ce qu'**on règle la couche de verre du coeur sur un indice de réfraction dans la gamme comprise entre 1,459 et 1,490.

9. Tube formant substrat en verre quartzeux pour la fabrication d'une préforme pour une fibre optique pour la technique optique de transmission d'informations, dans lequel la préforme comporte un verre formant coeur, qui est entouré par une gaine en verre, dont au moins une partie est préparée sous la forme d'un tube formant substrat, qui possède, dans la direction radiale, des zones ayant des dopages différentes, **caractérisé en ce que** le tube formant substrat comprend une couche de verre formant coeur possédant un indice de réfraction égal au moins à 1,459.

10. Tube formant substrat selon la revendication 9, **caractérisé en ce que** la couche de verre formant coeur est prévue de manière à être contiguë au verre formant coeur de la préforme.

11. Tube formant substrat selon la revendication 9 ou 10, **caractérisé en ce que** le tube formant substrat comprend une couche de verre enveloppe formée d'un verre quartzeux dopé par du fluor.

12. Tube formant substrat selon l'une des revendications précédentes 9 à 10, **caractérisé en ce que** la couche de verre formant coeur contient du germanium.

13. Tube formant substrat selon l'une des revendications précédentes 9 à 12, **caractérisé en ce que** la couche de verre formant coeur contient en outre du fluor.

14. Tube formant substrat selon l'une des revendications précédentes 9 à 13, **caractérisé en ce que** la couche de verre formant coeur possède un indice de réfraction dans la gamme comprise entre 1,4593 et 1,490.

15. Tube formant substrat selon l'une des revendications précédentes 9 à 14, **caractérisé en ce que** la teneur en ions hydroxyle dans la couche de verre formant coeur est égale au maximum à 1 ppm en poids.

16. Tube formant substrat selon l'une des revendications précédentes 9 à 15, **caractérisé en ce qu'**une couche de blocage contre la diffusion est prévue au voisinage de la couche en verre formant coeur.
